(19) Europäisches Patentamt / European Patent Office / Office européen des brevets

(11) **EP 4 368 996 A1**

(12) **EUROPEAN PATENT APPLICATION**
published in accordance with Art. 153(4) EPC

(43) Date of publication:
**15.05.2024 Bulletin 2024/20**

(21) Application number: **22837492.2**

(22) Date of filing: **23.06.2022**

(51) International Patent Classification (IPC):
*G01N 35/00* (2006.01)   *B01L 9/00* (2006.01)
*G01N 21/01* (2006.01)   *G01N 21/27* (2006.01)

(52) Cooperative Patent Classification (CPC):
**B01L 9/00; G01N 21/01; G01N 21/27; G01N 35/00**

(86) International application number:
**PCT/JP2022/025066**

(87) International publication number:
**WO 2023/282075 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.07.2021 JP 2021114065**

(71) Applicant: **HITACHI HIGH-TECH CORPORATION
Tokyo 105-6409 (JP)**

(72) Inventors:
- **HAYASHIDA Norihiro
  Tokyo 105-6409 (JP)**
- **MATSUOKA Yuya
  Tokyo 105-6409 (JP)**
- **TAKADA Eiichiro
  Tokyo 105-6409 (JP)**

(74) Representative: **MERH-IP Matias Erny Reichl
Hoffmann
Patentanwälte PartG mbB
Paul-Heyse-Strasse 29
80336 München (DE)**

(54) **AUTOMATIC ANALYSIS DEVICE AND REACTION VESSEL**

(57)   When a reaction solution in a reaction vessel is irradiated with light to measure an amount of transmitted light or the like, the reaction vessel rattles due to vibration and an optical axis is shifted, resulting in a decrease in measurement accuracy.

A torsion coil spring 302 for urging the reaction vessel is provided in a heat block 200 having a plurality of reaction vessel placement holes 201 on which the reaction vessel 112 is mounted, the reaction vessel 112 includes a protrusion 501 on a part of a side surface, and when the reaction vessel is inserted in the hole, an arm of the torsion coil spring 302 is operated so as to be retreated along the protrusion, and, when the reaction vessel is fitted in the hole, it urges the protrusion horizontally with a lower side in a vertical direction and urges the reaction vessel 112 to press against the wall of the hole 201.

[FIG. 6]

EP 4 368 996 A1

**Description**

[Technical Field]

This invention relates to an automatic analyzer and a reaction vessel thereof.

[Background Art]

For an automatic analyzer that analyzes a component in a sample such as blood and urine and that examines the presence or absence and the like of a microorganism, there are a biochemical automatic analyzer that performs a biochemical examination, an immunological automatic analyzer that performs an immunological examination, and the like. For example, the biochemical automatic analyzer performs colorimetric analysis by which a reagent that reacts with a target substance is added to a sample to cause a resultant mixture to be color developed by a chemical reaction, this color development is optically measured as the change with time of an absorbance by an absorptiometric method to calculate its absorbance change rate or the like, and this is substituted into a calibration curve to calculate a target component concentration. In addition, the immunological automatic analyzer performs immunological analysis by which a particular substance to be measured contained in a sample is labeled by an antigen-antibody reaction that causes a specific reaction, an amount of the labeled substance is quantified, and this is substituted into a calibration curve to calculate a target component concentration. In these reactions, a suitable temperature at which each reaction progresses most efficiently is present. Typically, in a sample examination that targets a substance present in a human's body, a reaction efficiency at 37°C close to a human's body temperature is good. For this, in many automatic analyzers, the chemical reaction of a substance to be measured is performed by a heat block or the like controlled to be near 37°C (see Patent Literature 1). In addition, known is a combined type automatic analyzer that combines the analyzing methods of the biochemical automatic analyzer and the immunological automatic analyzer into one. A reaction vessel that is used in this combined type automatic analyzer is also studied (see Patent Literature 2).

[Citation List]

[Patent Literature]

Patent Literature 1: WO2018/147029
Patent Literature 2: WO2020/066165

[Summary of Invention]

[Technical Problem]

Patent Literature 1 described above describes the invention in which the improvement in the temperature uniformity of the reaction solutions in the plurality of reaction vessels held by the heat block is achieved by a simple method and the stability of the measurement accuracy is improved while the apparatus itself is prevented from being increased in size. In addition, Patent Literature 2 described above describes the shape of the reaction vessel that can measure an amount of light from the reaction solution without lowering a function of maintaining the reaction vessel at the predetermined temperature.

On the other hand, a suitable holding mechanism when the reaction vessel is accommodated in the heat block is not described. In the combined type automatic analyzer that combines the analyzing methods of the biochemical automatic analyzer and the immunological automatic analyzer into one, a cylindrical shape is adopted in order to handle the reaction vessel by the same mechanism as the tip and in addition, to improve the robustness of the position adjustment at the time of insertion.

In addition, the reaction solution in the disposable reaction vessel held in the heat block is irradiated with light to measure an amount of the transmitted light or the scattered light. At the time of this light amount measurement, the heat block is rotating, so that the reaction vessel rattles due to vibration and the optical axis is shifted, resulting in a decrease in the measurement accuracy.

Accordingly, an object of the present invention is to provide an automatic analyzer that has a holding mechanism capable of preventing a reaction vessel from rattling without lowering a function of maintaining the reaction vessel at a predetermined temperature, and the reaction vessel.

[Solution to Problem]

In order to achieve the above object, an automatic analyzer is provided that analyzes a mixture of a sample and a reagent contained in a reaction vessel. The automatic analyzer comprises: a heat block including a hole into which the reaction vessel is inserted and an urging member that urges the reaction vessel. In the automatic analyzer, the reaction vessel includes a first protrusion on a part of a side surface, and when the reaction vessel is lowered from an upper side to a lower side in a vertical direction as it is inserted into the hole, the urging member is operated so as to be retreated to an outside of the reaction vessel along the first protrusion, and also is installed so as to urge the first protrusion downward in the vertical direction when the reaction vessel is fit in the hole.

Further, in order to achieve the above object, a reaction vessel is provided that contains a mixture of a sample and a reagent. The reaction vessel comprises: a first protrusion on a part of a side surface for urging with a spring; and a second protrusion as a part of the side surface, for guiding a light-transmitting surface, which is provided at a position deviating on a vertical line from the first protrusion, to be vertical.

[Advantageous Effects of Invention]

According to the invention, it is possible to provide an automatic analyzer that has a holding mechanism capable of preventing a reaction vessel from rattling without, lowering a function of maintaining the reaction vessel at a predetermined temperature. Objects, configurations, and effects other than the above will be apparent from the description of the following embodiments.

[Brief Description of Drawings]

FIG. 1 is a diagram illustrating an example of an overall configuration of an automatic analyzer according to a first embodiment.
FIG. 2 is a diagram illustrating an optical system in a heat block in which a reaction vessel according to the first embodiment is placed.
FIG. 3 is a schematic view illustrating the heat block according to the first embodiment.
FIG. 4 is a perspective view and a cross-sectional view illustrating a torsion coil spring installation position according to the first embodiment.
FIG. 5 is a schematic view illustrating a reaction vessel according to the first embodiment.
FIG. 6 is a diagram illustrating a movement of the torsion coil spring when the reaction vessel is inserted according to the first embodiment.
FIG. 7 is a schematic view illustrating a reaction vessel according to a second embodiment.
FIG. 8 is a schematic view illustrating a reaction vessel according to a third embodiment.
FIG. 9 is a schematic view illustrating a torsion coil spring stopper according to the third embodiment.
FIG. 10 is a schematic view illustrating a torsion coil spring stopper according to a fourth embodiment.
FIG. 11 is a schematic view illustrating a torsion coil spring stopper according to a fifth embodiment.

[Description of Embodiments]

Hereinbelow, preferred embodiments of an automatic analyzer according to the present invention will be described in accordance with the accompanying drawings. It should be noted that in the following description and accompanying drawings, constituting elements having the same function configurations are indicated by the same reference numerals, and the overlapped description is thus omitted.

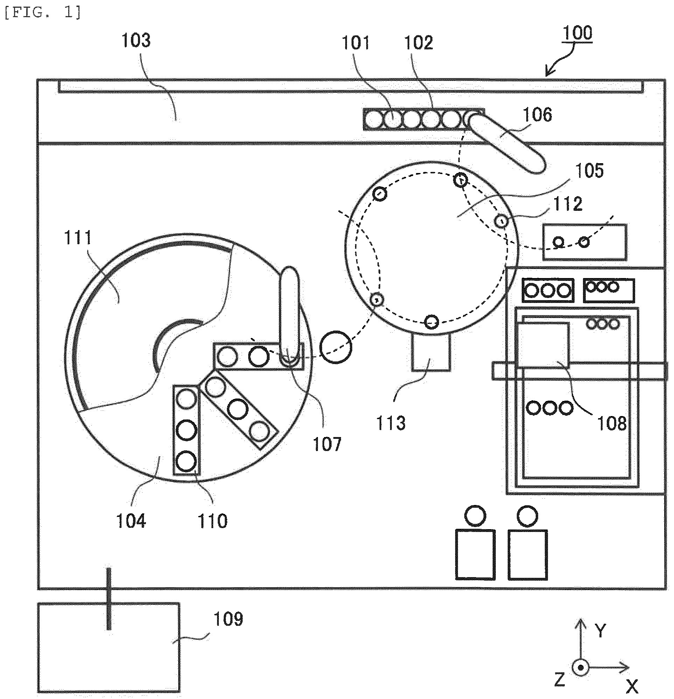

Referring to FIG. 1, an example of an overall configuration of an automatic analyzer 100 for a biochemical examination to which various embodiments are applied will be described. The automatic analyzer 100 has a sample transport path 103, a reagent disk 104, a transfer unit 108, an incubator 105, a spectrophotometer 113, and a control unit 109. Each portion will be described below. It should be noted that as illustrated on the lower right of FIG. 1, the left-right direction is an X axis, the up-down direction is a Y axis, and the vertical direction that is a direction perpendicular to the sheet surface is a Z axis.

The sample transport path 103 transports a sample rack 102 on which a plurality of sample containers 101 each containing a sample are mounted, to a position that can be accessed by a sample dispensing unit 106. The sample contained in the sample container 101 is dispensed by the sample dispensing unit 106 into a reaction vessel 112 held in the incubator 105.

The transfer unit 108 grips, by a gripper, the reaction vessel 112 and a dispensing tip that are consumable articles disposed on a tray, and transfers them. The reaction vessel 112 that is transferred by the transfer unit 108 from the tray to the incubator 105 is used for containing a mixture of the sample and a reagent, and is exchanged for each analysis. That is, the transfer unit 108 transfers the unused reaction vessel 112 to the incubator 105.

A plurality of reagent containers 110 each containing the reagent are stored in the reagent disk 104. To reduce the deterioration of the reagent, an interior of the reagent disk 104 is held at a temperature lower than a room temperature. In addition, the reagent disk 104 is covered by a reagent disk cover 111. It should be noted that in FIG. 1, to represent a disposing example of the reagent containers 110, only a part of the reagent disk cover 111 is illustrated. The reagent contained in the reagent container 110 is dispensed by a reagent dispensing unit 107 into the reaction vessel 112 into which the sample is dispensed.

The incubator 105 holds a plurality of reaction vessels 112 each containing the mixture of the sample and the reagent, and, to react the mixture, is held at a predetermined temperature, for example, at near 37°C. The mixture is reacted for a predetermined time in the process in which the reaction vessel 112 is held in the incubator 105 held at the predetermined temperature, and thus becomes a reaction solution used for analysis. The incubator 105 may be referred to as a heat block.

The spectrophotometer 113 measures an absorbance of the reaction solution in order to analyze a particular component contained in the reaction solution contained in the reaction vessel 112. The spectrophotometer 113 is disposed adjacent to the incubator 105, and has a light source, a spectroscopic element, and an optical detector. A halogen lamp is used for the light source, a diffraction grating is used for the spectroscopic element, and a photomultiplier tube, a photodiode, and the like are used for the optical detector. Light radiated from the light source is optically separated into each measurement wavelength by the spectroscopic element to be then emitted to the reaction solution contained in the reaction vessel 112, and an intensity of the light that has passed through the reaction solution is detected by the optical detector. An absorbance $A_\lambda$ related to a certain wavelength $\lambda$ is calculated by the following equation by using an intensity $I_{\lambda 0}$ of the light emitted to the reaction solution and an intensity Ix of the light that has passed through the reaction solution.

$$A_\lambda = \log\ (I_{\lambda 0}/I_\lambda)\ \ldots\ (\text{Equation 1})$$

In addition, the absorbance $A_\lambda$ is proportional to an optical path length L and a concentration C of the particular component contained in the reaction solution, so that the next equation is established.

$$A_\lambda = \varepsilon \cdot L \cdot C\ \ldots\ (\text{Equation 2})$$

Here, $\varepsilon$ is a proportional constant determined for each type of the particular component. That is, the concentration C of the particular component is calculated from the value of the absorbance $A_\lambda$ calculated from the intensity $I_\lambda$ of the transmitted light of the reaction solution and the optical path length L.

The control unit 109 is a device that controls the operation of each portion, receives the input of data necessary for analysis, and displays and stores the result of the analysis, and is, for example, a computer.

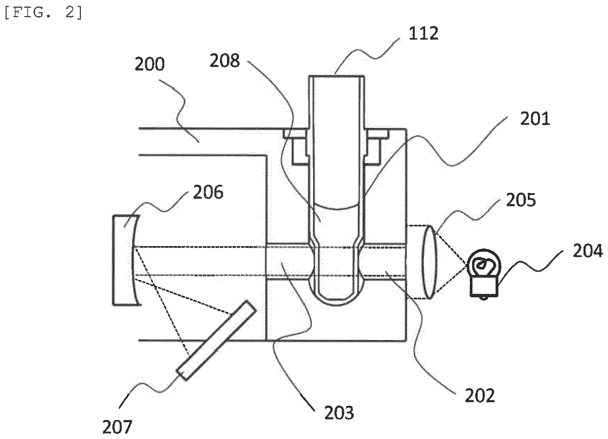

FIG. 2 is a diagram illustrating a cross section in a state where the reaction vessel 112 is installed in a heat block 200 that is the incubator. The heat block 200 includes a hole 201 that holds the reaction vessel 112, has a role of increasing and maintaining a temperature of the reaction solution in the reaction vessel 112 at the predetermined temperature, and has slits 202, 203 for passing light therethrough. The slits 202, 203 are opened in an optical path.

The optical system includes a light source 204, a condensing lens 205, a concave diffraction grating 206, and a receiver 207. Light emitted from the light source 204 is focused by the condensing lens 205, is limited in terms of an irradiation range by the irradiation slit 202, and is incident to the reaction vessel 112, and then, light having a light amount according to an absorbance of a reaction solution 208 in the reaction vessel 112 is caused to exit, is limited in terms of a light reception range by the light reception slit 203, is optically separated by the concave diffraction grating 206, and is received by the receiver 207. A light amount at each wavelength of the light received here is converted into an electric signal, thereby measuring an absorbance.

Embodiment 1

A first embodiment provides an automatic analyzer in which a torsion coil spring for urging a reaction vessel is provided on a heat block having a plurality of holes on which the reaction vessel is mounted, and the torsion coil spring is mounted near the hole of the heat block, and has an arm that directly urges the reaction vessel and a coil that gives a restoring force to the arm. The first embodiment is an embodiment having a configuration in which the reaction vessel into which a reaction solution in which a reagent and a sample are mixed is injected includes a first protrusion on a part of a side surface, and when the reaction vessel is inserted in the hole, the arm of the torsion coil spring is operated so as to be retreated along the first protrusion, and, when the reaction vessel is fitted in the hole, it urges the first protrusion horizontally with a lower side in the vertical direction and urges the reaction vessel to press against a wall of the hole.

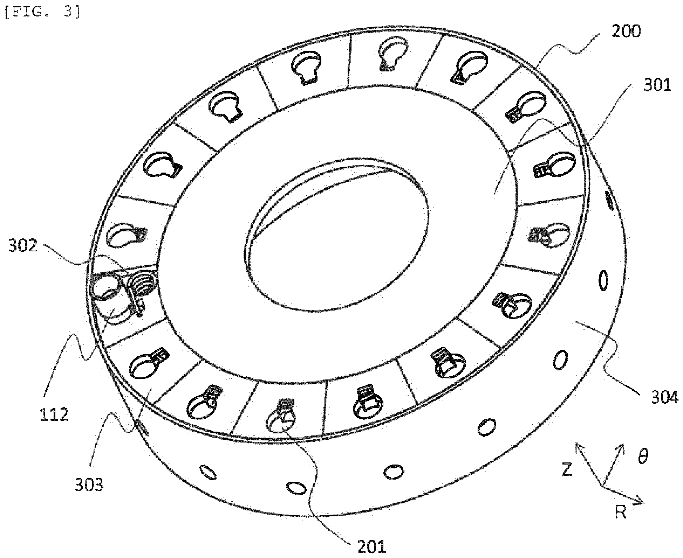

FIG. 3 is a diagram illustrating a configuration example of the heat block 200 of the automatic analyzer according to the first embodiment. A board 301 that is hollow circular and is axially supported so as to be rotatable about a center axis of the heat block 200 has the holes 201 that store a plurality of reaction vessels 112, and a torsion coil spring 302 for urging the reaction vessel is installed near the hole. A resin part 303 engages with the torsion coil spring 302, so that the torsion coil spring 302 is fixed to the heat block 200. When an installation position of the torsion coil spring 302 is provided on an outer circumference side with respect to the installation hole 201, a distance between a heater 304 that is a temperature adjusting mechanism provided on an outer circumference portion of the hollow circular board 301 and the reaction vessel 112 is increased, and the responsiveness of the temperature control is consequently deteriorated. For this reason, the torsion coil spring 302 is desirably installed inside with respect to the installation hole 201.

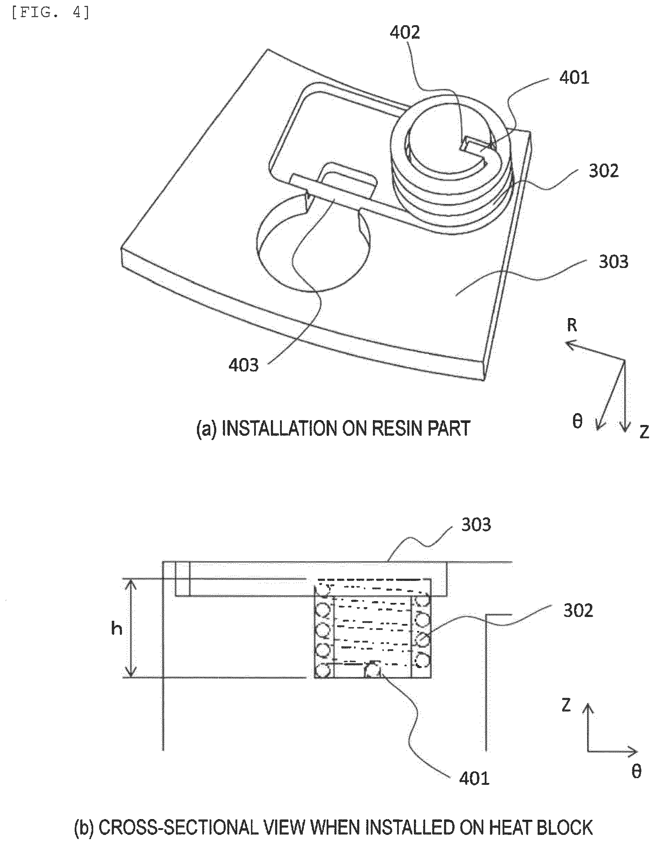

FIG. 4 is a cross-sectional view illustrating a fixing method of the torsion coil spring 302. FIGS. 4(a) and 4(b) illustrate a perspective view of the installation position of the torsion coil spring on the resin part and a cross-sectional view when the torsion coil spring is installed on the heat block. It is desirable that for the torsion coil spring 302, one that has a free height of the coil (a height when the coil is uncompressed) greater than a depth h of the hole provided in the heat block is selected, the torsion coil spring 302 is designed such that the torsion coil spring 302 is compressed at the time of installation to restore the height of the arm of the torsion coil spring 302 into place, and a force necessary for inserting the reaction vessel is constant. The resin part 303 is provided with a groove 402 that engages with an arm 401 of the torsion coil spring, as anti-rotation provided in the torsion coil spring, and functions in order for an arm 403 on the side urging the reaction vessel to be restored to the original position. It should be noted that the resin part 303 is not necessarily required to be made of a resin, and the groove as the anti-rotation may be provided on the heat block side.

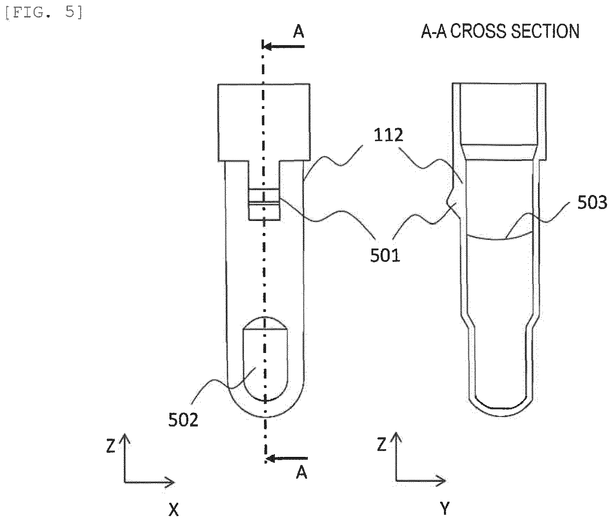

FIG. 5 is a diagram illustrating an appearance and a cross section of the reaction vessel according to this embodiment. The reaction vessel 112 is configured of a plastic material having a sufficient transmissivity with respect to a wavelength of light necessary for analysis, has, as a basic shape, a cylindrical shape, for transporting both of the dispensing tip and the reaction vessel by the same transporting mechanism, and has a protrusion 501 for urging with a spring to a side surface of the cylindrical portion. The protrusion 501 of the reaction vessel 112 has a mountain shape, and may be called a first protrusion.

That is, in consideration of the insertion and taking out of the reaction vessel 112, a shape of the protrusion 501 is desirably a mountain shape in which the torsion coil spring easily passes over the protrusion 501, and the protrusion 501 for urging is positioned on an upper side with respect to two flat surfaces 502 that are opposite and parallel and are provided near a bottom surface of the reaction vessel in order to measure an absorbance. In addition, the protrusion and the heat block are required to be processed so as not to interfere with each other, and since the protrusion becomes a portion that does not come into contact with the wall surface, it is desirable that the protrusion is provided on an upper side with respect to a liquid surface height 503 at a maximum reaction solution amount (a total liquid amount of the sample and the reagent), thereby not affecting temperature increasing performance.

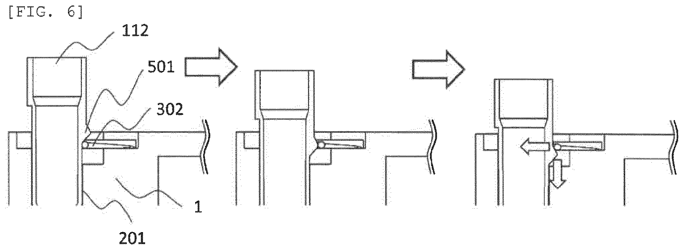

For the heat block and the reaction vessel that include the above configurations, as illustrated in FIG. 6, when the reaction vessel 112 is lowered from the upper side to the lower side in the vertical direction so as to be stored in the installation hole 201 of the heat block 200, the torsion coil spring 302 is operated so as to be retreated to an outside of the reaction vessel along the protrusion 501 of the reaction vessel, and as illustrated on the right side of the drawing, when the reaction vessel is fitted in the installation hole 201, the protrusion is urged downward in the vertical direction and the cylindrical portion of the reaction vessel is urged so as to press against the wall of the installation hole, so that the reaction vessel 112 receives a pressing force on the lower side and in the direction of the outside of the circumference.

Thus, an improvement in the measurement accuracy of the absorbance is enabled without rattling and rotating the reaction vessel 112. In addition, since the reaction vessel is pressed against the wall surface of the installation hole, heat from the heat block 200 is easily transmitted to the reaction vessel 112, which can lead also to an improvement in temperature control performance.

Embodiment 2

As a second embodiment, a variation of the reaction vessel of the first embodiment will be described. The second embodiment is an embodiment of a reaction vessel that contains a mixture of a sample and a reagent, the reaction vessel being configured to include a first protrusion on a part of a side surface for urging with a spring, and a second protrusion as a part of the side surface, for guiding a light-transmitting surface, which is provided at a position deviating on a vertical line from the first protrusion, to be vertical.

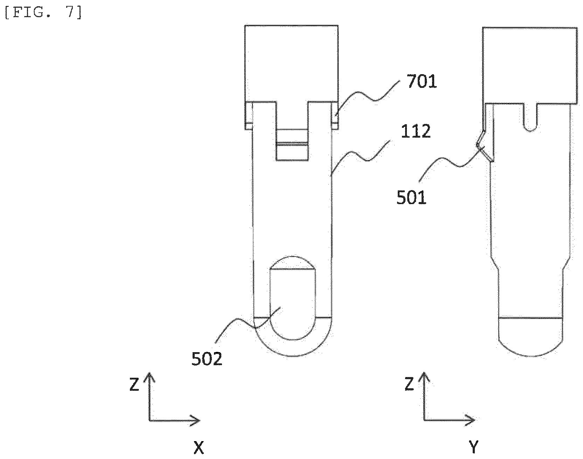

FIG. 7 is a diagram in which a protrusion 701 for guiding the light-transmitting surface to be vertical is added to the reaction vessel 112 according to this embodiment. That is, considered is a configuration in which the protrusion 701 for guiding the flat surface 502, that is, the light-transmitting surface, of the reaction vessel 112, such that an optical axis is vertical is added, and a guide groove that engages with the resin part 303 is provided, to increase the positioning accuracy of the reaction vessel 112. In this specification, the protrusion 701 may be called a second protrusion.

As illustrated in the drawing, the number of protrusions 701 is not limited to two and may be one, and the protrusion 701 may be located at any position with respect to the light-transmitting surface as long as the protrusion 701 can guide the light-transmitting surface such that the optical axis is vertical. For the shape, when the number of protrusions 701 is two, the second protrusion may have a different shape. The number of guide grooves is two, whereas the number of protrusions 501 may be one, and the number of guide grooves and the number of protrusions are not necessarily required to be equal. The guide groove may be provided not only on the resin part 303 but also on the heat block or both of them.

Embodiment 3

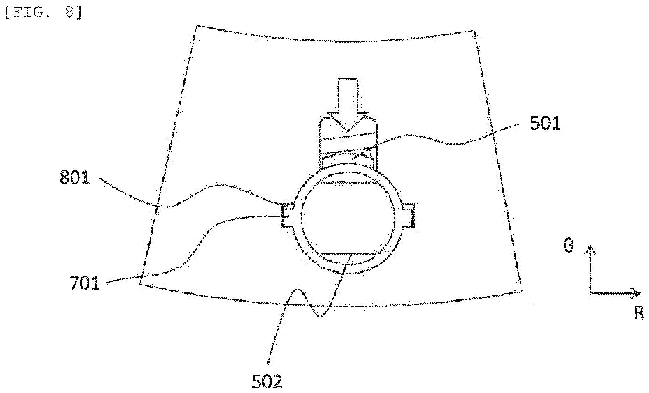

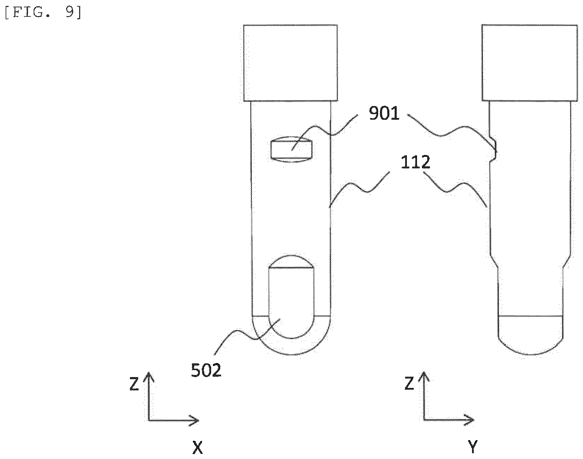

FIGS. 8 and 9 are diagrams illustrating the reaction vessel 112 having a recess that engages with torsion coil spring 901 according to a third embodiment. Like the second embodiment, the reaction vessel 112 has the flat surface 502. In the case of this embodiment, since the protrusion does not have a shape of being projected to the outside of the cylindrical portion of the reaction vessel 112, a clearance groove with respect to the protrusion is not required to be processed onto the heat block, so that productivity can be expected to be improved. It should be noted that the reference numeral 801 denotes a recess for holding reaction vessel of the resin part 303 with which the reaction vessel protrusion 701 engages.

Embodiment 4

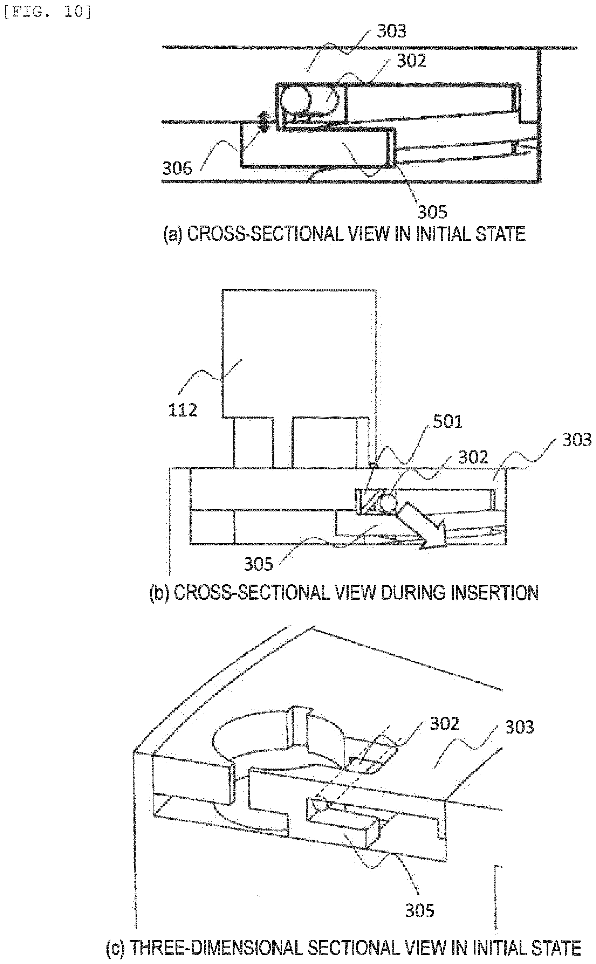

FIG. 10 is a diagram illustrating a state during insertion of a configuration of a fourth embodiment in which provided is a gap 503 such that the torsion coil spring 302 can be operated also in the vertical direction indicated by an arrow. FIGS. 10 (a), FIG. 10(b), and 10(c) illustrate a cross-sectional view in an initial state, a cross-sectional view during insertion, and a three-dimensional sectional view in the initial state, respectively.

When the operation direction of the torsion coil spring 302 is limited to the horizontal direction, an insertion force is considered to be increased due to friction of the torsion coil spring 302 with a supporting portion. As a method for solving this, in this embodiment, the gap 503 that allows the torsion coil spring 302 to be operated in the vertical direction is provided. In this configuration, the torsion coil spring 302 is moved in the gap 503 in the direction of the arrow indicated by FIG. 10(b), and since a friction force is not exerted between the torsion coil spring 302 and the supporting portion until the torsion coil spring 302 reaches an operation limit in the vertical direction to come into contact with a stopper 305, the reaction vessel 112 can be inserted by a small force. In addition, since the coil of the torsion coil spring 302 is also compressed at the same time, the portion of the arm of the spring is always brought into a state close to the horizontal, so that stable insertion is enabled.

However, to ensure that the torsion coil spring 302 passes over the protrusion 501 before the reaction vessel 112 finally reaches a position where the reaction vessel 112 is fixed, the stopper 305 is desirably provided at such a position that the torsion coil spring 302 comes to an upper portion with respect to the protrusion 501 at the fixing position of the reaction vessel 112.

In addition, a spring constant of the coil of the torsion coil spring 302 desirably has a value such that the arm of the spring is held close to the horizontal at the time of insertion, and since it is considered that with a balance such that the coil is largely compressed earlier, the coil is inclined with respect to a guide axis and the movement cannot be smooth, the balance at the spring constant such that the coil is lowered earlier than the arm is desirably avoided.

Embodiment 5

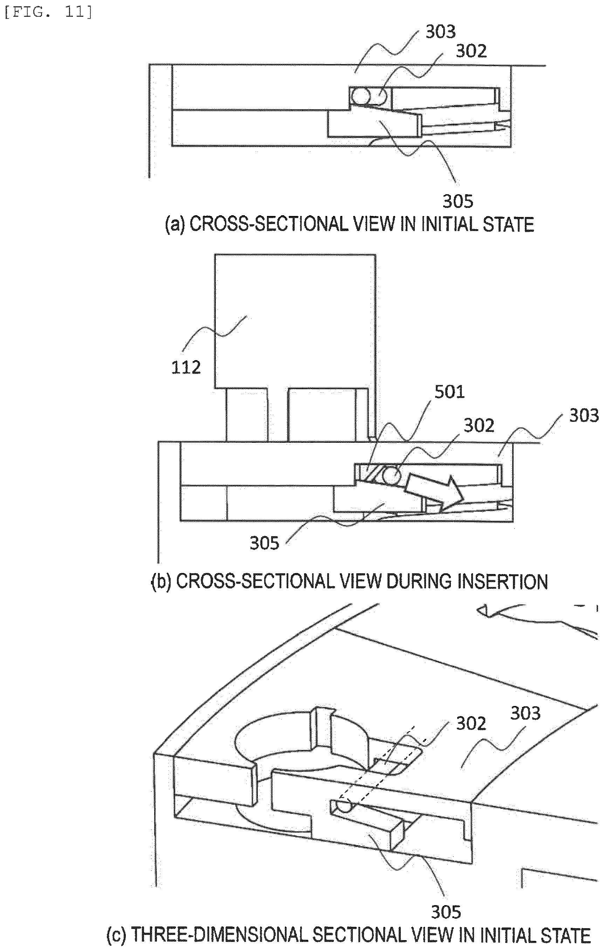

FIG. 11 is a diagram illustrating a state during insertion in a configuration of a fifth embodiment in which provided is a stopper 306 that has an inclination in order for a force inserting the reaction vessel 112 to be a force opening the torsion coil spring 302, for reducing the insertion force when the torsion coil spring 302 comes into contact with the stopper. FIGS. 11(a), 11(b), and 11(c) illustrate a cross-sectional view in an initial state, a cross-sectional view during insertion, and a three-dimensional sectional view in the initial state, respectively.

The inclination that guides the torsion coil spring 302 to escape not only in the horizontal direction but also in the vertical direction when the reaction vessel 112 is inserted is provided on the stopper 306, so that a friction force can be reduced, to thereby insert the cuvette by a lighter force. In this case, the torsion coil spring 302 is moved in a direction of an arrow indicated in FIG. 11. The inclination of the stopper 306 desirably has a maximum angle in a range in which the torsion coil spring 302 certainly passes over the protrusion 501 before the reaction vessel 112 reaches a position where the reaction vessel 112 is finally fixed. The configuration of this embodiment can exhibit a higher effect by being combined with the fourth embodiment.

The present invention is not limited to the embodiments and modification examples described above, and further includes various modification examples. For example, the examples and modification examples described above have been described in detail to simply describe the present invention, and are not necessarily required to include all the described configurations. In addition, a part of the configuration of an embodiment or modification example can be replaced with the configurations of other embodiments and modification examples, and in addition, the configuration of an embodiment or modification example can also be added with the configurations of other embodiments and modification examples. In addition, a part of the configuration of each embodiment and modification example can also be subjected to addition, deletion, and replacement with respect to the configurations included in other embodiments and modification examples.

[Reference Signs List]

| | |
|---|---|
| 100: | automatic analyzer |
| 101: | sample container |
| 102: | sample rack |
| 103: | sample transport path |
| 104: | reagent disk |
| 105: | incubator |
| 106: | sample dispensing unit |
| 107: | reagent dispensing unit |
| 108: | transfer unit |
| 109: | control unit |
| 110: | reagent container |
| 111: | reagent disk cover |
| 112: | reaction vessel |
| 113: | spectrophotometer |
| 200: | heat block |
| 201: | reaction vessel placement hole |
| 202: | incident side slit |
| 203: | exit side slit |
| 204: | light source |
| 205: | condensing lens |
| 206: | concave diffraction grating |
| 207: | receiver |
| 208: | reaction solution |
| 301: | board |
| 302: | torsion coil spring |
| 303: | resin part |
| 304: | heater |
| 305, 306: | stopper |
| 401: | anti-rotation groove |
| 501: | reaction vessel protrusion |
| 502: | reaction vessel flat surface |
| 503: | gap |
| 701: | reaction vessel protrusion |
| 801: | recess for holding reaction vessel |
| 901: | recess that engages with torsion coil spring |

**Claims**

1. An automatic analyzer that analyzes a mixture of a sample and a reagent contained in a reaction vessel, comprising:

a heat block including a hole into which the reaction vessel is inserted and an urging member that urges the reaction vessel,
wherein the reaction vessel includes a first protrusion on a part of a side surface, and

when the reaction vessel is lowered from an upper side to a lower side in a vertical direction as it is inserted into the hole, the urging member is operated so as to be retreated to an outside of the reaction vessel along the first protrusion, and also is installed so as to urge the first protrusion downward in the vertical direction when the reaction vessel is fit in the hole.

2. The automatic analyzer according to claim 1, wherein the urging member presses the first protrusion in a horizontal direction and presses the reaction vessel against a wall of the hole.

3. The automatic analyzer according to claim 2, wherein the reaction vessel includes a second protrusion as a part of the side surface, which is provided at a position deviating on a line from the first protrusion in the vertical direction, and the heat block includes a groove for fitting with the second protrusion.

4. The automatic analyzer according to claim 1, wherein the urging member is also operated in the vertical direction along the first protrusion when the reaction vessel is inserted.

5. The automatic analyzer according to claim 1, wherein the urging member is also operated in the vertical direction along the first protrusion when the reaction vessel is inserted, and includes a stopper so as not to be moved more than a certain amount of movement.

6. The automatic analyzer according to claim 5, wherein the urging member includes a stopper having an inclination that allows a predetermined vertical movement even in an absence of the reaction vessel, and, when the reaction vessel is inserted, further allows the vertical movement as it is retreated to the outside of the reaction vessel along the first protrusion.

7. The automatic analyzer according to claim 1, wherein the urging member includes a stopper having an inclination so as to be guided to be fit within a predetermined height in an absence of the reaction vessel, and, when the reaction vessel is inserted, to allow a vertical movement as it is retreated to an outside of the reaction vessel along the first protrusion.

8. The automatic analyzer according to claim 7, wherein the urging member includes a stopper having an inclination that allows a predetermined vertical movement even in an absence of the reaction vessel, and, when the reaction vessel is inserted, further allows the vertical movement as it is retreated to the outside of the reaction vessel along the first protrusion.

9. A reaction vessel that contains a mixture of a sample and a reagent, comprising:

a first protrusion on a part of a side surface for urging with a spring; and
a second protrusion as a part of the side surface, for guiding a light-transmitting surface, which is provided at a position deviating on a vertical line from the first protrusion, to be vertical.

10. The reaction vessel according to claim 9, wherein the second protrusion is provided in a pair at opposite positions on the side surface of the reaction vessel.

[FIG. 1]

[FIG. 2]

[FIG. 3]

[FIG. 4]

(a) INSTALLATION ON RESIN PART

(b) CROSS-SECTIONAL VIEW WHEN INSTALLED ON HEAT BLOCK

[FIG. 5]

[FIG. 6]

[FIG. 7]

701

112

501

502

Z → X

Z → Y

[FIG. 8]

501

801

701

502

θ

R

[FIG. 9]

[FIG. 10]

(a) CROSS-SECTIONAL VIEW IN INITIAL STATE

(b) CROSS-SECTIONAL VIEW DURING INSERTION

(c) THREE-DIMENSIONAL SECTIONAL VIEW IN INITIAL STATE

[FIG. 11]

(a) CROSS-SECTIONAL VIEW IN INITIAL STATE

(b) CROSS-SECTIONAL VIEW DURING INSERTION

(c) THREE-DIMENSIONAL SECTIONAL VIEW IN INITIAL STATE

## INTERNATIONAL SEARCH REPORT

| | International application No. |
|---|---|
| | **PCT/JP2022/025066** |

**A.  CLASSIFICATION OF SUBJECT MATTER**

*G01N 35/00*(2006.01)i; *B01L 9/00*(2006.01)i; *G01N 21/01*(2006.01)i; *G01N 21/27*(2006.01)i
FI:   G01N35/00 B; G01N21/01 B; G01N21/27 Z; B01L9/00

According to International Patent Classification (IPC) or to both national classification and IPC

**B.  FIELDS SEARCHED**

Minimum documentation searched (classification system followed by classification symbols)

G01N35/00; B01L9/00; G01N21/01; G01N21/27

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | WO 2020/075806 A1 (LSI MEDIENCE CORP.) 16 April 2020 (2020-04-16) claim 1, paragraphs [0013], [0014], [0022], [0032]-[0036], fig. 2, 13-19 | 1, 3-4, 9-10 |
| A | | 2, 5-8 |
| A | WO 2020/075803 A1 (LSI MEDIENCE CORP.) 16 April 2020 (2020-04-16) paragraph [0049] | 1, 3-4, 9-10 |
| A | 坪田宜之. ラテックス凝集反応を利用した測定法. 医用電子と生体工学. 1984, vol. 22, no. 4, pp. 267-273, (TSUBOTA, Nobuyuki. Application of Latex Agglutination Reaction to Quantitative Analysis. Japanese journal of medical electronics and biological engineering.) 5.1.1. Agglutination Reaction | 1, 3-4, 9-10 |
| A | WO 2020/066165 A1 (HITACHI HIGH-TECHNOLOGIES CORP.) 02 April 2020 (2020-04-02) fig. 3 | 3, 9-10 |
| A | JP 2019-193673 A (GEN-PROBE INC.) 07 November 2019 (2019-11-07) | 1-10 |
| A | CN 105866456 A (CHENGDU EMPEROR MEDICAL TECHNOLOGY CO., LTD.) 17 August 2016 (2016-08-17) | 1-10 |

☐ Further documents are listed in the continuation of Box C.    ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **30 August 2022** | **06 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/025066**

| Patent document cited in search report | | | Publication date (day/month/year) | Patent family member(s) | | | Publication date (day/month/year) |
|---|---|---|---|---|---|---|---|
| WO | 2020/075806 | A1 | 16 April 2020 | (Family: none) | | | |
| WO | 2020/075803 | A1 | 16 April 2020 | (Family: none) | | | |
| WO | 2020/066165 | A1 | 02 April 2020 | US | 2022/0042902 | A1 | |
| | | | | fig. 3 | | | |
| | | | | EP | 3859344 | A1 | |
| | | | | CN | 112771382 | A | |
| | | | | BR | 112021004605 | A | |
| JP | 2019-193673 | A | 07 November 2019 | US | 2014/0038192 | A1 | |
| | | | | WO | 2014/022532 | A2 | |
| | | | | CN | 104619622 | A | |
| CN | 105866456 | A | 17 August 2016 | (Family: none) | | | |

Form PCT/ISA/210 (patent family annex) (January 2015)

**EP 4 368 996 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018147029 A
- WO 2020066165 A